# EUROPEAN PATENT SPECIFICATION

(11) **EP 3 650 896 B1**
(45) Date of publication and mention of the grant of the patent: **25.01.2023**
(21) Application number: 18789312.8
(22) Date of filing: 07.03.2018
(51) Int. Cl.: G02B 6/122, G02B 1/00

(54) **TRANSPARENT DISPLAY APPARATUS AND PREPARATION METHOD THEREFOR**
TRANSPARENTE ANZEIGEVORRICHTUNG UND HERSTELLUNGSVERFAHREN DAFÜR
APPAREIL D'AFFICHAGE TRANSPARENT ET SON PROCÉDÉ DE PRÉPARATION

(30) Priority: 07.07.2017 CN 201710552654
(43) Date of publication of application: 13.05.2020
(73) Proprietor: BOE TECHNOLOGY GROUP CO., LTD., Beijing 100015 (CN); FUZHOU BOE OPTOELECTRONICS TECHNOLOGY CO., LTD., Dianthus Street Fuqing Fujian 350300 (CN)
(72) Inventor: WANG, Qiaoni, Beijing 100176 (CN); CHEN, Hui, Beijing 100176 (CN); LUO, Shijian, Beijing 100176 (CN); ZHANG, Xinyu, Beijing 100176 (CN); LIN, Yabin, Beijing 100176 (CN)
(74) Representative: Klunker IP Patentanwälte PartG mbB
(86) International application number: PCT/CN2018/078290
(87) International publication number: WO 2019/007094

(56) References cited:
- WO-A1-2013/069740
- CN-A- 103 529 513
- CN-A- 104 101 940
- CN-A- 106 575 034
- JP-A- 2006 343 671
- US-A1- 2016 141 452

## Description

### TECHNICAL FIELD

The present invention relates to a transparent display device and a manufacturing method thereof.

### BACKGROUND

The display panel of the transparent display device has a certain light transmittance, can display the background image behind the panel, and can also actively display a set picture. Transparent display device is often used in a window exhibition hall, an architectural window, automotive glass, human-computer interaction and other fields, can integrate the display function in actual scenes, achieves beautiful and realistic display, and has broad application prospect.

CN 106 575 034 A discloses an optical device for expanding input light in two dimensions in an augmented reality display. The device comprises a waveguide and three linear diffraction gratings H0, H1, H2. An incident beam from a projector illuminates an input grating H0 with polychromatic light, and the light is coupled into the waveguide. The other two gratings H1 and H2 are overlaid on top of one another. Light can be diffracted by the one grating H1 into a first diffracted order and towards the other grating H2 which can couple the light out of the waveguide towards a viewer. In another arrangement the crossed gratings H1, H2 are replaced by a photonic crystal having a regular array of pillars which create a number effective diffraction gratings.

### SUMMARY

It is an object of the present invention to provide a transparent display device and a manufacturing method thereof. Desirably, the total internal reflection photonic crystal backplate included in the transparent display device can change the propagation direction of incident light, can convert light incident into a display panel from different directions into vertical incident light, and uniformly disperse the incident light. Desirably, the transparent display device has uniform display brightness and has higher display quality.

The object is achieved by the features of independent claim 1, 4 and 7. Further embodiments are defined in the corresponding dependent claims. Even though the description refers to embodiments or to the invention, it is to be understood that the invention is defined by the claims and embodiments of the invention are those comprising at least all the features of one of the independent claims.

### BRIEF DESCRIPTION OF THE DRAWINGS

In order to clearly illustrate the technical solution of the embodiments of the disclosure, the drawings of the embodiments will be briefly described in the following; it is obvious that the described drawings are only related to some embodiments of the disclosure and thus are not limitative of the disclosure.
FIG. 1 is a schematic view of a transparent display device provided by an embodiment of the present disclosure;
FIGS. 2A and 2B are respectively a plan view and a side view of a total internal reflection photonic crystal backplate provided by an embodiment of the present disclosure;
FIG. 3 is a schematic view of a transparent display device provided by an embodiment of the present disclosure;
FIG. 4 is a plan view of another total internal reflection photonic crystal backplate provided by an embodiment of the present disclosure;
FIGS. 5A and 5B are respectively a plan view and a side view of a total internal reflection photonic crystal backplate provided by another embodiment of the present disclosure;
FIGS. 6A and 6B are respectively a plan view and a side view of a total internal reflection photonic crystal backplate provided by still another embodiment of the present disclosure; and
FIG. 7 is a flowchart illustrating a manufacturing process of a transparent display device provided by an embodiment of the present disclosure.

### Reference numerals of the accompanying drawings:

100- display panel; 200- total internal reflection photonic crystal backplate; 201- substrate; 202- first cylinder; 203- second cylinder; 211- substrate; 212- first square prism; 213- second square prism; 221- substrate; 222- third cylinder; 223- fourth square prism; 300- backlight.

### DETAILED DESCRIPTION

In order to make objects, technical details and advantages of the embodiments of the disclosure apparent, the technical solutions of the embodiment will be described in a clearly and fully understandable way in connection with the drawings related to the embodiments of the disclosure. It is obvious that the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms, such as "first," "second," or the like, which are used in the description and the claims of the present disclosure, are not intended to indicate any sequence, amount or importance, but for distinguishing various components. The terms, such as "comprise/comprising," "include/including," or the like are intended to specify that the elements or the objects stated before these terms encompass the elements or the objects and equivalents thereof listed after these terms, but not preclude other elements or objects. The terms, such as "connect/connecting/connected," "couple/coupling/coupled" or the like, are not limited to a physical connection or mechanical connection, but may include an electrical connection/coupling, directly or indirectly. The terms, "on," "under," or the like are only used to indicate relative position relationship, and when the position of the object which is described is changed, the relative position relationship may be changed accordingly.

The existing transparent display device often uses ambient light as a light source for illumination, or uses an external backlight for auxiliary illumination to enhance the display effect. At this time, the light source is separated from the display panel, so an incident light incident into the display panel tends to have a certain angle with the display panel instead of normal incidence. Thus, the display panel may receive light unevenly and have low brightness, thereby reducing the display quality of the transparent display device.

Photonic crystal is a dielectric structure with the refractive index which is changed periodically in space. The change period of the refractive index and the wavelength of light are in the same order of magnitude. There are two types of photonic crystals, namely a total internal reflection type photonic crystal material and a photonic band gap material. The total internal reflection type photonic crystal material has no cut-off transmission characteristic. When d/A<0.2 is satisfied, the light energy from the near ultraviolet band to the infrared band is restricted to propagate in a certain direction in the photonic crystal, so the photonic crystal can receive and modulate incident light. The photonic band gap material is an artificial periodic dielectric structure with a photonic band gap, and electromagnetic waves whose frequencies fall within the photonic band gap are prohibited from propagating. For instance, the photonic crystal may be obtained by dielectric rod packing, precision mechanical drilling, colloidal particle self-assembled growth, colloidal solution self-assembled growth, semiconductor processes, etc. These methods may prepare various kinds of photonic crystals by artificially controlling the ratio of the dielectric constants of the dielectric materials in the photonic crystal and the microperiodic structure of the photonic crystal.

Description will be given below to the concept of the present disclosure with reference to several specific embodiments.

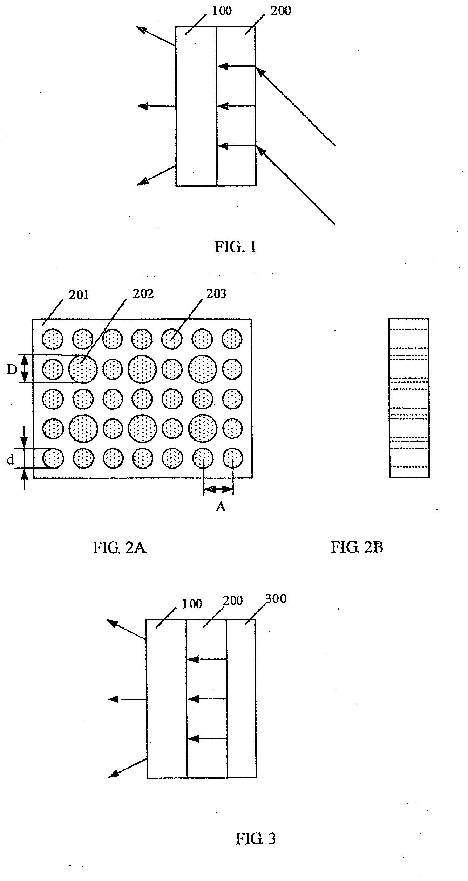

At least one embodiment of the present disclosure provides a transparent display device. FIG. 1 is a schematic diagram of the transparent display device provided by the embodiment. As shown in FIG. 1, the transparent display device comprises a display panel 100 and a total internal reflection photonic crystal backplate 200. The display panel 100 includes a display side and an incident side opposite to the display side. The total internal reflection type photonic crystal backplate 200 is disposed on the incident side of the display panel 100. The total internal reflection type photonic crystal backplate 200 includes a substrate 201 and a plurality of pillar structures periodically arranged in the substrate 201, and the refractive index of the pillar structure is different from the refractive index of the substrate. For instance, the refractive index of the pillar structure is higher than or lower than the refractive index of the substrate 201. For instance, the pillar structure may include cylindrical structure, polygonal prism, or a combination of the pillar structure and the polygonal structure.

When the refractive index of the pillar structure is higher than the refractive index of the substrate, the equivalent refractive index of a region in which the pillar structure is disposed is higher than the equivalent refractive index (the equivalent refractive index is the mean refractive index of one region) of a peripheral region thereof, so the region in which the pillar structure is disposed can realize the total internal reflection of light. For instance, when the refractive index of the pillar structure is lower than the refractive index of the substrate, the equivalent refractive index of the peripheral region of the pillar structure is higher than the equivalent refractive index of the region in which the pillar structure is disposed, so the peripheral region of the pillar structure can realize the total internal reflection of light.

FIGS. 2A and 2B are respectively a plan view and a side view of a total internal reflection type photonic crystal backplate provided by the embodiment. As shown in FIGS. 2A and 2B, in the embodiment, the pillar structure adopts cylindrical structure. The cylindrical structures has multiple different diameters, and the refractive index of the cylindrical structure with the maximum diameter is greater than the refractive index of the substrate 201, so the equivalent refractive index of a region in which the cylindrical structure with the maximum diameter is disposed is higher than the equivalent refractive index of the peripheral region thereof, and then the total internal reflection of light can be realized.

In the embodiment, the cylindrical structures have two different diameters, namely the cylindrical structures include a first cylinder 202 and a second cylinder 203, in which the diameter of the first cylinder 202 is greater than the diameter of the second cylinder 203, and the refractive index of the first cylinder 202 is greater than the refractive index of the substrate 201; there are a plurality of the first cylinder 202 and a plurality of the second cylinder 203; and both the first cylinders 202 and the second cylinders 203 adopt the periodically arrangement manner. In the embodiment, the first cylinder 202 and the second cylinder 203 are alternately arranged. For instance, in the exemplary arrangement as shown in FIG. 2A, a plurality of second cylinders 203 are arranged around one first cylinder 202. For instance, a first row of cylindrical structures of the total internal reflection type photonic crystal backplate 200 are all set to be the second cylinders 203; a second row adopts the manner of alternately arranging the first cylinder 202 and the second cylinder 203; a third row is all set to be the second cylinder 203; a fourth row adopts the manner of alternately arranging the first cylinder 202 and the second cylinder 203 ... The total internal reflection type photonic crystal backplate 200 is formed by such periodical arrangement. Of course, the embodiment of the present disclosure is not limited to the above arrangement mode. For instance, a plurality of first cylinders 202 may be arranged around one second cylinder 203.

In the embodiment, the diameters of the first cylinder 202 and the second cylinder 203 are both not greater than 5µm. For instance, in the embodiment, a diameter D of the first cylinder 202 may be selected to be about 4µm, and a diameter d of the second cylinder 203 may be selected to be about 2µm. In the embodiment, an axial distance of adjacent cylindrical structures is almost the same and set to be A, namely the axial distance between the first cylinder 202/the second cylinder 203 and the second cylinder 203 is A, d:A<0.2. For instance, in the embodiment, when the diameter D of the first cylinder 202 is selected to be about 4µm and the diameter d of the second cylinder 203 is selected to be about 1µm, the axial distance A may be selected to be about 8µm. In other embodiments of the present disclosure, the diameter D of the first cylinder 202 may be selected to be about 3µm; the diameter d of the second cylinder 203 may be selected to be about 1µm; and the axial distance A may be selected to be about 6µm. Or the diameter D of the first cylinder 202 may be selected to be about 5µm; the diameter d of the second cylinder 203 may be selected to be about 2µm; and the axial distance A may be selected to be about 12µm. By such size settings, the total internal reflection type photonic crystal backplate 200 can better adjust the direction of propagation of light (such as visible light) and achieve the uniform dispersion of light.

It should be noted that all the numbers disclosed herein are approximate, whether or not the word "about" or "approximately" is used in the present disclosure. The value of each number may vary by 1%, 2%, 5%, 7%, 8%, 10%, 15% or 20%.

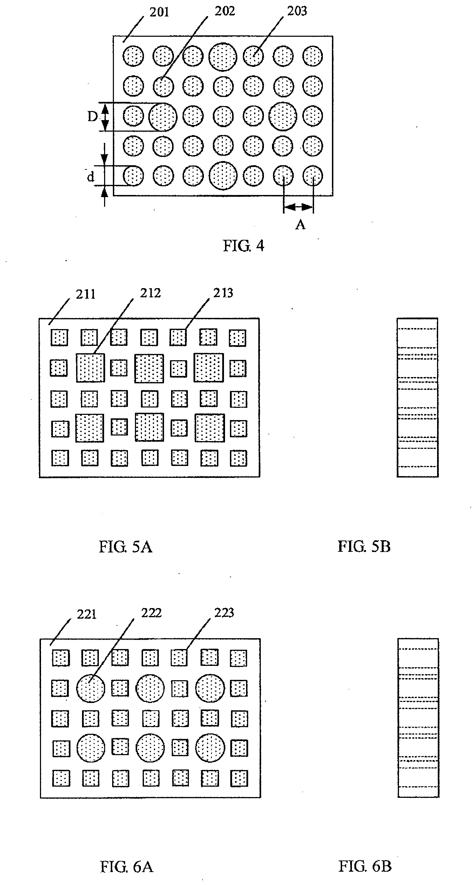

In the embodiment, a ratio of the number of the first cylinders 202 to the number of the second cylinders 203 is not greater than 1:20, namely a plurality of second cylinders 203 may be alternately arranged between two adjacent first cylinders 202, so a plurality of second cylinders 203 surround the first cylinder 202. For instance, FIG. 4 illustratively shows the case that three second cylinders 203 are alternately arranged between two adjacent first cylinders 202. Thus, compared with the total internal reflection type photonic crystal backplate as shown in FIG. 2A, in the embodiment, more second cylinders 203 surround the first cylinder 202. In other embodiments of the present disclosure, the number of the second cylinders 203 surrounding one first cylinder 202 may be larger. For instance, the ratio of the number of the first cylinders 202 to the number of the second cylinders 203 is 1 :(30-40). For instance, the ratio of the number of the first cylinders 202 to the number of the second cylinders 203 is 1:35. By adoption of such arrangement mode of pillar structures, the total internal reflection type photonic crystal backplate 200 can better adjust the direction of propagation of light (such as visible light) and achieve the uniform dispersion of light.

It should be noted that the pillar structure in the embodiment of the present disclosure, for instance, the cylindrical structure in the embodiment, may have multiple different diameters, which is not limited to two, for instance, may have three diameters, and the cylindrical structures may be similarly and periodically arranged, for example, may be alternately arranged. No further description will be given here.

In the embodiment, a material of the substrate 201 of the total internal reflection type photonic crystal backplate 200 is glass, transparent resin or other suitable materials. For instance, the substrate 201 may be made from materials such as silica glass or acrylic transparent resin. A thickness of the substrate 201 may adopt thin design, for example, is not greater than 5cm, e.g., 0.5-30 mm. Moreover, for instance, the low thickness such as about 1.5mm, about 2.5mm or about 15mm may be adopted.

In the embodiment, the refractive index of the first cylinder 202 is greater than the refractive index of the substrate 201, so the refractive index of the selected material of the first cylinder 202 shall be greater than the refractive index of the material of the substrate 201. The refractive index of the second cylinder 203 is not limited in the embodiment. Thus, the refractive index of the selected material of the second cylinder may be greater than or less than the refractive index of the material of the substrate 201.

The refractive index of the second cylinder 203 may be less than the refractive index of the substrate 201, and at this point, the refractive index of the first cylinder 202 may be greater than or equal to the refractive index of the substrate 201. For instance, in the example as shown in FIG. 2A, the material of the second cylinder 203 may be air, and the material of the substrate 201 may be glass. At this point, the refractive index of the adopted material of the first cylinder 202 may be greater than or equal to the refractive index of glass. For instance, the first cylinder 202 may adopt the same material with the substrate 201, namely glass. At this point, the first cylinders 202 and the substrate 201 may be an integral structure, so as to omit the step of forming the first cylinders 202, thereby simplifying the manufacturing process. In the example, the equivalent refractive index of a region provided with the second cylinder 203 is less than the equivalent refractive index of the original position of the first cylinder 202, so the original position of the first cylinder 202 can still realize the total internal reflection of light.

In the embodiment, an optical axis of the total internal reflection photonic crystal backplate 200, is perpendicular to the display panel 100, namely a central axis of the pillar structure of the total internal reflection photonic crystal backplate 200 is perpendicular to the display panel 100. Therefore, the total internal reflection photonic crystal backplate 200 can constrain light incident into the display panel 100 from different directions, e.g., visible light, in the pillar structure, and convert the light into normal incident light. Moreover, due to the optical coupling function of different cylinders, the total internal reflection photonic crystal backplate 200 can uniformly disperse the incident light, so as to obtain the uniform brightness of the display panel 100.

The total internal reflection photonic crystal backplate 200 may be connected with the display panel 100 by glue or a mechanical structure. For instance, in the embodiment, the total internal reflection photonic crystal backplate 200 may be bonded with the display panel 100 through optically clear adhesive (OCA). The OCA is colorless and transparent and has light transmittance of above 90%, and hence the seamless connection between the total internal reflection photonic crystal backplate 200 and the display panel 100 can be realized, and the transparent display device can achieve the technical effect of frameless transparent displaying. Of course, the total internal reflection photonic crystal backplate 200 may also be connected with the display panel 100 through a mechanical structure such as a frame or a clip. The specific form will not be limited here.

The display panel 100 of the transparent display device may be a liquid crystal display (LCD) panel, an organic light-emitting diode (OLED) display panel, an e-paper display panel or the like, and the type of the display panel 100 is not limited thereto.

As shown in FIG. 3, the transparent display device may further comprise a backlight 300. The backlight 300, for instance, may be disposed on an incident side of the display panel 100, and then light emitted by the backlight 300 may be modulated by the total internal reflection photonic crystal backplate 200 and then enters the display panel 100. Therefore, the total internal reflection photonic crystal backplate 200 converts light incident into the display panel 100 from different directions into normal incident light, uniformly disperses the incident light, and achieves the uniform brightness of the display panel 100. The backlight may be of various types, for instance, side light type or direct type, and may include a light guide plate (LGP) and an optical film (such as a diffusion film) so as to convert a point source or a line source into a surface source.

At least one embodiment of the present disclosure provides a transparent display device. As shown in FIG. 1, the transparent display device comprises a display panel 100 and a total internal reflection photonic crystal backplate 200. The display panel 100 includes a display side and an incident side opposite to the display side. The total internal reflection photonic crystal backplate 200 is disposed on the incident side of the display panel. The total internal reflection photonic crystal backplate 200 includes a substrate 211 and a plurality of pillar structures periodically arranged in the substrate 211, and the pillar structure and the substrate have different refractive indexes.

As different from the above embodiment, in the embodiment, the pillar structure adopts polygonal prism structure, e.g., square prism structure. The square prism structures may have a variety of different sizes, and the refractive index of the square prism structure with the maximum size is greater than the refractive index of the substrate 211.

For instance, FIGS. 5A and 5B are plan view and side view of the total internal reflection photonic crystal backplate provided by the embodiment. As shown in FIG. 5A, in the embodiment, the square prism structures have two different sizes, namely the square prism structures include first square prisms 212 and second square prisms 213, wherein the side length of the first square prism 212 is greater than the side length of the second square prism 213; the refractive index of the first square prism 212 is greater than the refractive index of the substrate 211; the number of the first square prisms 212 and the second square prisms 213 is both numerous; and the first square prisms 212 and the second square prisms 213 adopt periodical arrangement mode. For instance, the second square prisms 213 may be arranged around the first square prism 212. The specific settings and the specific mode of periodical arrangement are basically the same with those in the above embodiment, so no further description will be given here.

It should be noted that in the embodiment, the polygonal prism structure is not limited to the square prism and may also include other polygonal prisms, such as hexagonal prism or octagonal prism. No limitation will be given here in the embodiment. In addition, the pillar structure in the embodiment of the present disclosure, for instance, the polygonal prism structure in the embodiment, may have more different sizes and are not limited to two sizes, and similar arrangement is made according to actual conditions. No further description will be given here.

At least one embodiment of the present disclosure provides a transparent display device. As shown in FIG. 1, the transparent display device comprises a display panel 100 and a total internal reflection photonic crystal backplate 200. The display panel 100 includes a display side and an incident side opposite to the display side. The total internal reflection photonic crystal backplate 200 is disposed on the incident side of the display panel 100. The total internal reflection photonic crystal backplate 200 includes a substrate 221 and a plurality of pillar structures periodically arranged in the substrate 221, and the pillar structure and the substrate have different refractive indexes.

As different from the above embodiment, in the embodiment, the pillar structures adopt cylindrical structures and polygonal prism structures. For instance, cylindrical structures and square prism structures are combined for use, and the refractive index of the cylindrical structure with the maximum size is greater than the refractive index of the substrate 221.

For instance, FIGS. 6A and 6B are plan view and side view of the total internal reflection photonic crystal backplate provided by the embodiment. As shown in FIG. 6A, in the embodiment, the total internal reflection photonic crystal backplate 200 includes a cylindrical structure and a square prism structure, for instance, comprises a third cylinder 222 and a fourth square prism 223, wherein a diameter of the third cylinder 222 is greater than a side length of the fourth square prism 223, and a refractive index of the third cylinder 222 is greater than a refractive index of the substrate 221; there are a plurality of the third cylinders 222 and there are a plurality of the fourth square prisms 223; and the third cylinders 222 and the fourth square prisms 223 adopt periodical arrangement mode. The specific settings and the specific mode of periodical arrangement are basically the same with the above embodiment, so no further description will be given here.

Similarly, in the embodiment, the polygonal prism structure is not limited to the square prism, and may also be other polygonal prisms, such as hexagonal prism or octagonal prism. No limitation will be given here in the embodiment. In addition, the pillar structure in the embodiment of the present disclosure, for instance, the cylindrical structure and the polygonal prism structure in the embodiment, may also have more different sizes and are not limited to one size, and similar arrangement may be made according to actual conditions. No further description will be given here.

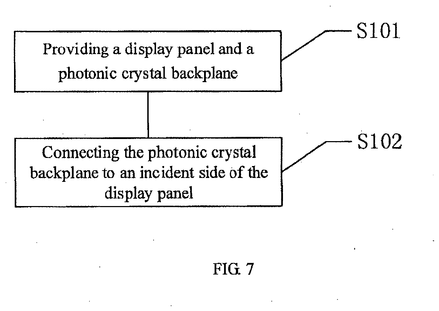

At least one embodiment of the present disclosure provides a method for manufacturing a transparent display device. As shown in FIG. 7, the method comprises:

S101: providing a display panel and a total internal reflection photonic crystal backplate.

In the embodiment, the display panel may be an LCD panel, an OLED display panel, an e-paper display panel or the like, and a type of the display panel is not limited thereto. The manufacturing method of the display panel may adopt a method known by an inventor, so no further description will be given here.

In the embodiment, the total internal reflection photonic crystal backplate includes a substrate and a plurality of pillar structures periodically arranged in the substrate, and the pillar structure and the substrate have different refractive indexes.

In the embodiment, a material of the substrate of the total internal reflection photonic crystal backplate is glass, transparent resin or other suitable materials. For instance, the substrate may be made from materials such as silica glass or acrylic transparent resin. A thickness of the substrate of the photonic crystal backplate may adopt thin design, for example, is not greater than 5cm, e.g., 0.5-30 mm. Moreover, for instance, the low thickness such as 1.5mm, 2.5mm or 15mm may be adopted.

In the embodiment, a material of the pillar structure of the total internal reflection photonic crystal backplate is glass, transparent resin, air or other suitable materials.

For instance, when the material of the pillar structures is air, the manufacturing method of the pillar structure may include: forming a hollowed pillar structure by forming an air pillar penetrating through the substrate. When the material of the pillar structure is glass, transparent resin or other materials, the manufacturing method of the pillar structures may include: obtaining the pillar structure by forming an air pillar penetrating through the substrate and filling glass, transparent resin or other materials into the air pillar. At this point, the refractive index of the selected material of the pillar structure is selected to be greater than or less than the refractive index of the selected material of the substrate of the photonic crystal backplate as needed.

In the embodiment, the pillar structure of the total internal reflection photonic crystal backplate is formed in the substrate of the total internal reflection photonic crystal backplate in a direction with its central axis perpendicular to the substrate. Thus, when the total internal reflection photonic crystal backplate is combined with the display panel, an optical axis of the total internal reflection photonic crystal backplate may be perpendicular to the display panel. Therefore, the total internal reflection photonic crystal backplate can convert light incident into the display panel from different directions, e.g., visible light, into vertical incident light, uniformly disperse the incident light, and realize the uniform brightness of the display panel.

S102: connecting the total internal reflection photonic crystal backplate to the incident side of the display panel.

The total internal reflection photonic crystal backplate may be connected with the display panel by glue or a mechanical structure. For instance, in the embodiment, the total internal reflection photonic crystal backplate may be bonded with the display panel through OCA(optical clear adhesive). The OCA is colorless and transparent and has light transmittance of above 90%, and hence can realize a seamless connection between the total internal reflection photonic crystal backplate and the display panel, and the transparent display device can achieve the technical effect of frameless transparent displaying. In addition, the total internal reflection photonic crystal backplate may also be connected with the display panel through a mechanical connection mode, such as a frame or a clip. The specific connection mode will not be limited here.

The transparent display device may further comprise a backlight, so the manufacturing method of the transparent display device provided by the embodiment may further comprise: connecting the backlight to the display panel.

As shown in FIG. 3, the backlight 300, for instance, may be connected to the incident side of the display panel 100 and connected to an outside surface of the total internal reflection photonic crystal backplate 200. For instance, the backlight 300 is connected to an edge of the outside surface of the total internal reflection photonic crystal backplate 200, so light emitted by the backlight 300 may be modulated by the total internal reflection photonic crystal backplate 200 and then enter the display panel 100. Therefore, the total internal reflection photonic crystal backplate 200 can convert light incident into the display panel 100 from different directions into vertical incident light, uniformly disperse the incident light, and realize the uniform brightness of the display panel 100.

The transparent display device provided by at least one embodiment of the present disclosure has at least one of the following advantages:
(1)An embodiment of the present disclosure provides a transparent display device. The transparent display device comprises a total internal reflection photonic crystal backplate. The total internal reflection photonic crystal backplate can change the propagation direction of incident light, can convert light incident into the display panel from different directions into vertical incident light, and uniformly disperse the incident light. Therefore, the transparent display device has uniform display brightness and has higher display quality.
(2) An embodiment of the present disclosure provides a transparent display device. A material of a total internal reflection photonic crystal backplate of the transparent display device has a wide range and is in low price, is close to the material of the display panel, and hence can have better integration with the display panel, which can facilitate the thin design and the frameless transparent display of the display device.

The following statements should be noted:
(1) The accompanying drawings involve only the structure(s) in connection with the embodiment(s) of the present disclosure, and other structure(s) can be referred to common design(s).
(2) For the purpose of clarity only, in accompanying drawings for illustrating the embodiment(s) of the present disclosure, the thickness and size of a layer or a structure may be enlarged, that is, the accompanying drawings are not drawn according to the actual scale. However, it should understood that, in the case in which a component or element such as a layer, film, region, substrate or the like is referred to be "on" or "under" another component or element, it may be directly on or under the another component or element or a component or element is interposed therebetween.
(3) In case of no conflict, features in one embodiment or in different embodiments can be combined.

## Claims

1. A transparent display device, comprising:
a display panel (100), including a display side and an incident side opposite to the display side; and
a total internal reflection photonic crystal backplate (200), disposed at the incident side of the display panel (100), and including a substrate (201) and a plurality of pillar structures periodically arranged in the substrate (201);
wherein a refractive index of the plurality of pillar structures is different from a refractive index of the substrate (201);
wherein the pillar structure includes a cylindrical structure;
**characterized in that:**
the cylindrical structure has a plurality of different diameters and the cylindrical structures include a plurality of first cylinders (202) and a plurality of second cylinders (203), a diameter of the first cylinder (202) is greater than a diameter of the second cylinder (203), and a refractive index of the first cylinder (202) is greater than the refractive index of the substrate (201), and the second cylinders (203) are arranged around the first cylinder (202);
the diameter of the second cylinder (203) is d, an axial distance between the first cylinder (202) and the second cylinder (203) is A, and d:A<0.2; and
a ratio of a number of the first cylinders (202) to a number of the second cylinders (203) is not greater than 1:20.

2. The transparent display device according to claim 1, wherein the diameter of the first cylinder (202) and the diameter of the second cylinder (203) are not greater than 5µm.

3. The transparent display device according to claim 1, wherein the ratio of the number of the first cylinders (202) to the number of the second cylinders (203) is 1:(30-40).

4. The transparent display device according to claim 1, wherein the pillar structure includes an alternatively polygonal prism structure, the polygonal prism structure includes a plurality of polygonal prisms, the plurality of polygonal prisms having the same periodical arrangement as the cylinders of claim 1, wherein the plurality of polygonal prisms include a plurality of first prisms and a plurality of second prisms, a size of the first prisms is greater than a size of the second prisms, and a refractive index of the first prisms is greater than the refractive index of the substrate (201), and the second prisms are arranged around the first prisms.

5. The transparent display device according to any one of claims 1 to 4, wherein a material of the substrate (201) is glass or transparent resin.

6. The transparent display device according to any one of claims 1 to 5, wherein a material of the pillar structure is glass, transparent resin or air.

7. A method for manufacturing a transparent display device, comprising:
providing a display panel (100) and a total internal reflection photonic crystal backplate (200) according to claim 1 or 4.

## Patentansprüche

1. Transparente Anzeigevorrichtung, mit:
einem Anzeige-Panel (100), das eine Anzeige-Seite und eine der Anzeige-Seite gegenüberliegende Eintrittsseite aufweist; und
einer photonische Kristallrückplatte (200) mit interner Totalreflexion, die an der Eintrittsseite des Anzeige-Panels (100) angeordnet ist und ein Substrat (201) und eine Vielzahl von Säulenstrukturen aufweist, die periodisch in dem Substrat (201) angeordnet sind;
wobei ein Brechungsindex der Vielzahl von Säulenstrukturen zu einem Brechungsindex des Substrats (201) verschieden ist;
wobei die Säulenstruktur eine zylindrische Struktur aufweist;
**dadurch gekennzeichnet, dass**
die zylindrische Struktur eine Vielzahl von unterschiedlichen Durchmessern aufweist und die zylindrischen Strukturen eine Vielzahl von ersten Zylindern (202) und eine Vielzahl von zweiten Zylindern (203) aufweisen, ein Durchmesser des ersten Zylinders (202) größer als ein Durchmesser des zweiten Zylinders (203) ist, und ein Brechungsindex des ersten Zylinders (202) größer als der Brechungsindex des Substrats (201) ist, und die zweiten Zylinder (203) um den ersten Zylinder (202) herum angeordnet sind;
der Durchmesser des zweiten Zylinders (203) d ist, ein axialer Abstand zwischen dem ersten Zylinder (202) und dem zweiten Zylinder (203) A ist, und d:A<0,2; und
das Verhältnis der Anzahl der ersten Zylinder (202) zu der Anzahl der zweiten Zylinder (203) nicht größer als 1:20 ist.

2. Transparente Anzeigevorrichtung nach Anspruch 1, wobei der Durchmesser des ersten Zylinders (202) und der Durchmesser des zweiten Zylinders (203) nicht größer als 5µm ist.

3. Transparente Anzeigevorrichtung nach Anspruch 1, wobei das Verhältnis der Anzahl der ersten Zylinder (202) zur Anzahl der zweiten Zylinder (203) 1:(30-40) beträgt.

4. Transparente Anzeigevorrichtung nach Anspruch 1, wobei die Säulenstruktur eine alternativ polygonale Prismenstruktur aufweist, wobei die polygonale Prismenstruktur eine Vielzahl von polygonalen Prismen aufweist, wobei die Vielzahl von polygonalen Prismen die gleiche periodische Anordnung wie die Zylinder nach Anspruch 1 aufweist, wobei die Vielzahl von polygonalen Prismen eine Vielzahl von ersten Prismen und eine Vielzahl von zweiten Prismen aufweist, eine Größe der ersten Prismen größer als eine Größe der zweiten Prismen ist und ein Brechungsindex der ersten Prismen größer als der Brechungsindex des Substrats (201) ist und die zweiten Prismen um die ersten Prismen herum angeordnet sind.

5. Transparente Anzeigevorrichtung nach einem der Ansprüche 1 bis 4, wobei ein Material des Substrats (201) Glas oder transparentes Harz ist.

6. Transparente Anzeigevorrichtung nach einem der Ansprüche 1 bis 5, wobei ein Material der Säulenstruktur Glas, transparentes Harz oder Luft ist.

7. Verfahren zur Herstellung einer transparenten Anzeigevorrichtung, mit:
Vorsehen eines Anzeige-Panels (100) und einer photonischen Kristallrückwand (200) mit totaler interner Reflexion gemäß Anspruch 1 oder 4.

## Revendications

1. Dispositif d'affichage transparent, comprenant :
un panneau d'affichage (100) qui inclut un côté d'affichage et un côté d'incidence opposé au côté d'affichage ; et
une plaque arrière à cristaux photoniques à réflexion interne totale (200) qui est disposée au niveau du côté d'incidence du panneau d'affichage (100) et qui inclut un substrat (201) et une pluralité de structures de piliers qui sont agencées de façon périodique dans le substrat (201) ;
dans lequel un indice de réfraction de la pluralité de structures de piliers est différent d'un indice de réfraction du substrat (201) ; et
dans lequel la structure de piliers inclut une structure cylindrique ;
**caractérisé en ce que** :
la structure cylindrique comporte une pluralité de diamètres différents et les structures cylindriques incluent une pluralité de premiers cylindres (202) et une pluralité de seconds cylindres (203), un diamètre du premier cylindre (202) est supérieur à un diamètre du second cylindre (203) et un indice de réfraction du premier cylindre (202) est supérieur à l'indice de réfraction du substrat (201) et les seconds cylindres (203) sont agencés autour du premier cylindre (202) ;
le diamètre du second cylindre (203) est d, une distance axiale entre le premier cylindre (202) et le second cylindre (203) est A et d:A < 0,2 ; et
un rapport d'un nombre des premiers cylindres (202) sur un nombre des seconds cylindres (203) n'est pas supérieur à 1:20.

2. Dispositif d'affichage transparent selon la revendication 1, dans lequel le diamètre du premier cylindre (202) et le diamètre du second cylindre (203) ne sont pas supérieurs à 5 µm.

3. Dispositif d'affichage transparent selon la revendication 1, dans lequel le rapport du nombre des premiers cylindres (202) sur le nombre des seconds cylindres (203) est 1:(30-40).

4. Dispositif d'affichage transparent selon la revendication 1, dans lequel la structure de piliers inclut une structure de prismes polygonaux alternative, la structure de prismes polygonaux inclut une pluralité de prismes polygonaux, la pluralité de prismes polygonaux présentant le même agencement périodique que les cylindres selon la revendication 1, dans lequel la pluralité de prismes polygonaux inclut une pluralité de premiers prismes et une pluralité de seconds prismes, une dimension des premiers prismes est supérieure à une dimension des seconds prismes, un indice de réfraction des premiers prismes est supérieur à l'indice de réfraction du substrat (201), et les seconds prismes sont agencés autour des premiers prismes.

5. Dispositif d'affichage transparent selon l'une quelconque des revendications 1 à 4, dans lequel un matériau du substrat (201) est du verre ou une résine transparente.

6. Dispositif d'affichage transparent selon l'une quelconque des revendications 1 à 5, dans lequel un matériau de la structure de piliers est du verre, une résine transparente ou de l'air.

7. Procédé pour fabriquer un dispositif d'affichage transparent, comprenant :
la fourniture d'un panneau d'affichage (100) et d'une plaque arrière à cristaux photoniques à réflexion interne totale (200) selon la revendication 1 ou 4.
